# EUROPÄISCHE PATENTSCHRIFT

(11) **EP 1 995 193 B1**
(45) Veröffentlichungstag und Bekanntmachung des Hinweises auf die Patenterteilung: **26.05.2010**
(21) Anmeldenummer: 08154409.0
(22) Anmeldetag: 11.04.2008
(51) Int. Cl.: B65G 49/08, B65G 65/00

(54) **Be- und Entladestation für ein Trocknergestell für Formlinge, insbesondere aus tonhaltigem oder ähnlichem Material**
Loading and unloading station for a drying rack for moulded items, in particular those made from clay or similar material
Station de chargement et de déchargement pour une structure de séchoir pour ébauches, en particulier en matériau contenant du sable argileux ou analogue

(30) Priorität: 25.05.2007 DE 102007024457
(43) Veröffentlichungstag der Anmeldung: 26.11.2008
(73) Patentinhaber: Hans Lingl Anlagenbau und Verfahrenstechnik GmbH & Co. KG, 86381 Krumbach (DE)
(72) Erfinder: Simmnacher, Franz, 86513 Ursberg-Mindelzell (DE); Hoffmann, Manfred, 86868 Mittelneufnach (DE)
(74) Vertreter: Körber, Martin Hans

(56) Entgegenhaltungen:
- EP-A- 0 301 231
- EP-A- 0 999 158
- WO-A-2005/030668
- FR-A- 2 468 544

## Beschreibung

Die Erfindung betrifft eine Be- und Entladestation gemäß dem Oberbegriff des Anspruchs 1 und einem Trocknergestell gemäß dem Oberbegriff des Anspruchs 2.

Eine Be- und Entladestation sowie ein Trocknergestell dieser Arten sind in der Baustoffindustrie vorbekannt, insbesondere zum Be- und Entladen von Fliesen, Platten oder Ziegeln auf ein bzw. von einem Trocknergestell mit mehreren übereinander und gegebenenfalls auch nebeneinander angeordneten Fächern zur Aufnahme der Formlinge jeweils an einem im zugehörigen Fach befindlichen Deponierplatz.

Eine solche, z.B. in der EP 0999158 B1 beschriebene Be- und Entladestation dient dazu, ein auf einem Parkplatz befindliches Trocknergestell vor dem Trocknen mit keramischen Produkten zu beladen und nach dem Trocknen zu entladen. Diese Be- und Entladestation weist einen Be- und Entladeplatz sowie dazu seitlich versetzt einen Umladeplatz und eine höhenverstellbare Fördereinrichtung auf, mit der sich eine aus mehreren nebeneinander angeordneten Formlingen bestehende Formlingslage in einer maximal der horizontalen Querschnittsform und -größe der Fächer entsprechenden Lagenform und -größe vom Umladeplatz zum Be- und Entladeplatz fördern und übergeben lässt, und zwar in einer dem gewünschten Fach entsprechenden Höhenlage. Mit der Fördereinrichtung lässt sich die betreffende Formlingslage auch vom Be- und Entladeplatz horizontal in das betreffende Fach fördern. Bei dieser Be- und Entladestation ist die Fördereinrichtung durch eine Vielzahl antreibbarer horizontaler Rollen gebildet, die am Umladeplatz, am Be- und Entladeplatz und im Bereich der Fächer angeordnet sind, in denen sie jeweils einen Fachboden bilden. Im Bereich des Be- und Entladeplatzes bilden die antreibbaren Rollen eine höhenverstellbare Hubplattform.

Durch ein Drehen der Rollen in die einer einwärts oder auswärts gerichteten Drehrichtung der Rollen lässt sich eine zugehörige Formlingslage zum Beladen von der Hubplattform in das gewünschte Fach bewegen oder aus dem jeweiligen Fach auf die Hubplattform bewegen, von der die Formlingslage übernommen und zum Umladeplatz weiter gefördert werden kann. Eine solche Konstruktion ist nicht nur wegen der Vielzahl der vorhandenen angetriebenen Rollen vielgliedrig und aufwendig, sondern es besteht auch die Gefahr, dass durch die Trocknungsvorgänge, insbesondere in unter Wärmeeinwirkung stehenden Trocknungsöfen, die Funktion der Rollen beeinträchtigt wird und Funktionsstörungen eintreten oder es besonderer Wartungsmaßnahmen bedarf, um dies zu verhindern.

Es ist außerdem bereits vorgeschlagen worden, die Formlingslagen jeweils auf einem flachen Formlingsträger anzuordnen, der mit der zugehörigen Formlingslage durch eine im Sinne eines Gabelstaplers ausgebildeten Fördereinrichtung beim Beladen in das Fach eingeschoben und auf zugehörige Fachbodenleisten abgesenkt wird oder zum Entladen von den Fachbodenleisten abgehoben und aus den Fach heraus gefördert wird. Bei einer solchen Ausgestaltung ist die Raumausnutzung des Trocknergestells wesentlich verringert, weil es wegen des Anhebens der Formlingslage im jeweiligen Fach einer vergrößerten Höhe der Fächer bedarf und deshalb die Aufnahmekapazität des Trocknergestells verringert ist.

Der Erfindung liegt die Aufgabe zugrunde, eine Be- und Entladestation sowie ein Trocknergestell der eingangs angegebenen Arten so auszugestalten, dass bei Gewährleistung einer einfachen Ausgestaltung und guten Raumausnutzung die Förderung der Formlinge verbessert wird. Im weiteren soll eine einfache und kostengünstig herstellbare Ausgestaltung erreicht werden. Ferner soll die Be- und Entladestation so ausgebildet sein, dass das Trocknergestell mit einer großen Kapazität beladen bzw. entladen werden kann.

Diese Aufgabe wird durch die Merkmale des Anspruchs 1 oder 2 gelöst. Vorteilhafte der Weiterbildungen der Erfindung sind in den Unteransprüchen beschrieben.

Bei beiden erfindungsgemäßen Lösungen gemäß den Ansprüchen 1 und 2 ist den Fächern des Trockengestells jeweils ein einziger Formlingsträger für die Formlinge zugeordnet, der durch ein Schub- und Zugelement der Fördereinrichtung zwischen einer am Be- und Entladeplatz angeordneten Belade- und Entladestellung und einer im Fach angeordneten Deponierstellung bewegbar ist. Hierdurch ergeben sich mehrere Vorteile. Zum einen ist für jeden Formling oder jede Formlingslage nur ein Formlingsträger erforderlich, der aufgrund seiner Bewegbarkeit zwischen seiner Belade- und Entladestellung am Belade- und Entladeplatz sowie seiner Deponierstellung im zugehörigen Fach in allen Positionen seine Tragfunktion erfüllen kann und deshalb die Anzahl der Formlingsträger reduziert ist. Da die Bewegung zwischen der Belade- und Entladestellung sowie der Deponierstellung im Fach in ein und derselben Höhenlage erfolgt, lässt sich unter Berücksichtigung der Höhenabmessung der Formlingslage eine niedrige Fachhöhe realisieren, da letztere nur mit einem Bewegungsspiel größer ausgebildet zu sein braucht als die Höhenabmessung des wenigstens einen Formlings. Hierdurch lässt sich somit der vorhandene Höhenraum des Trockengestells gut ausnutzen und eine große Aufnahmekapazität für die Formlinge erreichen.

Bei der Erfindung verbleiben die Formlingsträger immer am zugehörigen Trockengestell, wobei sie aufgrund ihrer horizontalen Bewegung zwischen ihrer Deponierstellung und ihrer Belade- und Entladestellung vorübergehend ein Teil der Fördereinrichtung bilden, jedoch aufgrund ihrer Lösbarkeit und wieder Verbindbarkeit mit dem Schub- und Zugelement der Fördereinrichtung wahlweise getrennt und mit dem Trocknergestell fortbewegt werden können.

Außerdem können bei der Erfindung die Formlingsträger in der neben dem Trocknergestell befindlichen Be- und Entladestellung die Funktion einer tragenden Brücke erfüllen, die nur in ihrem dem Schub- und Zugelement abgewandten und zugewandten Endbereich abgestützt ist. Die Abstützung des dem Schub- und Zugelement abgewandten Endbereichs erfolgt vorteilhaft am Trocknergestell, z.B. dadurch, dass dieser Endbereich auf einem Führungs- oder Stützteil des Trockengestells aufliegt und/oder in das Fach hineinragt. Im dem Schub- und Zugelement zugewandten Endbereich kann der Formlingsträger jeweils durch das Schub- und Zugelement selbst abgestützt sein.

Die Verbindungsvorrichtung zwischen dem Schub- und Zugelement und dem ihm zugewandten Endbereich des Formlingsträgers ist wenigstens in dessen Einschubstellung wahlweise verbindbar und wieder lösbar. Zum Beladen des betreffenden Fachs lässt sich somit das Schub- und Zugelement in seinem vorbewegten Bewegungsendbereich mit dem Formlingsträger verbinden oder lösen. Im zurück bewegten Bewegungsendbereich bleibt dagegen die Verbindungsvorrichtung geschlossen.

Eine einfache Ausgestaltung der Verbindungsvorrichtung besteht z.B. darin, sie mit wenigstens einem, z.B. am Schub- und Zugelement angeordneten, hakenförmigen Verbindungselement auszubilden, dass den zugewandten Endbereich des Formlingsträgers vorzugsweise unter- und hintergreift, z.B. im Bereich eines vertikalen Steges, der außerdem den Formlingsträger stabilisiert.

Ein hakenförmiges Verbindungselement ermöglicht es auch, die Verbindungsvorrichtung dadurch zu schließen bzw. zu öffnen, dass eines der Verbindungselemente, z.B. das hakenförmige Verbindungselement, unter oder über das Gegenverbindungselement des Formlingsträgers bewegt wird, und zum Schließen der Verbindung aufwärts bzw. abwärts bewegt wird, so dass das hakenförmige Verbindungselement den Formlingsträger formschlüssig hintergreift. Das Lösen der Verbindungsvorrichtung kann somit durch ein Absenken oder Anheben des z.B. nach oben oder nach unten gerichteten hakenförmigen Verbindungselements erfolgen.

Eine raumgünstige Konstruktion für die Fördereinrichtung ist dann gegeben, wenn das Schub- und Zugelement an einem horizontalen Antriebs- oder Tragarm angeordnet ist, der z.B. in einer Ausgangsstellung an der der Belade- und Entladeseite des Trocknergestells gegenüberliegenden Seite des Be- und Entladeplatzes angeordnet ist und an einer Tragkonstruktion vertikal bewegbar gelagert ist, die am oder in der Nähe des Bodens parallel zur Achsrichtung der Fächer auf einer Führung oder einer Bahn hin und her bewegbar ist. Dabei ist es im weiteren vorteilhaft, die Führung oder die Bahn und die Tragkonstruktion an einer der beiden sich quer zur Be- und Entladeseite des Trocknergestells ersteckenden Seiten des Be- und Entladeplatzes anzuordnen.

Eine weitere Fördereinrichtung zum Fördern der Formlinge zwischen einem Umladeplatz und dem Be- und Entladeplatz kann vorzugsweise an der der Tragkonstruktion gegenüberliegenden Seite des Be- und Entladeplatzes angeordnet sein.

Weitere Merkmale der Unteransprüche ermöglichen einfache und kleine Konstruktionen, die sich kostengünstig herstellen lassen und die Funktion verbessern.

Wesentlich ist auch, dass bei der Verwendung eines Greifers die erfindungsgemäßen Formlingsträger für die Förderung der Formlinge oder Formlingslagen zwischen dem Umladeplatz und dem Be- und Entladeplatz nicht benötigt werden. Deshalb braucht diese erste Fördereinrichtung auch nicht dahingehend ausgebildet zu sein, die Formlinge bzw. die Formlingslage mit dem Formlingsträger weiter zu fördern z.B. zum Umladeplatz. Hierzu ist eine greiferförmige weitere Fördereinrichtung vorteilhaft.

Nachfolgend werden vorteilhafte Ausgestaltungen der Erfindung anhand von in Zeichnungen dargestellten Ausführungsbeispielen näher erläutert. Es zeigt
- Fig. 1: eine erfindungsgemäße Be- und Entladestation für ein Trocknergestell für Formlinge aus tonhaltigen oder ähnlichem Material in der Draufsicht ;
- Fig. 2: die Be- und Entladestation in der Seitenansicht II-II in Fig. 1;
- Fig. 3: die Be- und Entladestation in der Seitenansicht III-III in Fig. 1.

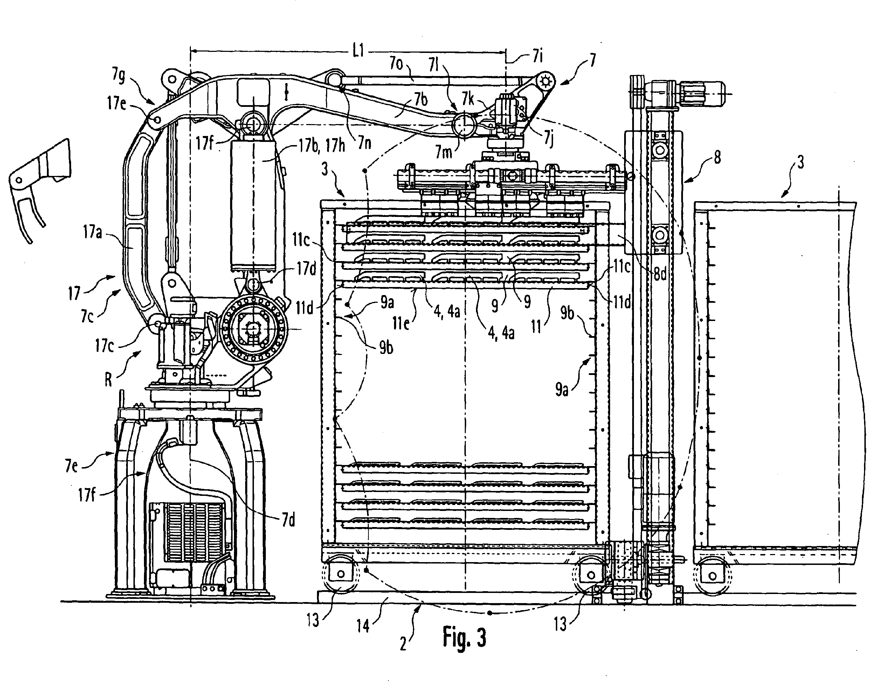

Die in ihrer Gesamtheit mit 1 bezeichnete Be- und Entladestation weist die folgenden Hauptkomponenten auf, nämlich einen Parkplatz 2 für ein Trocknergestell 3 zur Aufnahme (Beladen) oder Entnahme (Entladen) von Formlingen 4 (Fig. 3) aus tonhaltigem oder ähnlichen Material wie Fliesen, Ziegel oder dergleichen Bauelemente, ein Be- und Entladeplatz 5, ein bezüglich diesem seitlich versetzt angeordneter Umladeplatz 6 und zwei Fördereinrichtungen 7, 8 zum Fördern einer aus mehreren nebeneinander angeordneten Formlingen 4 bestehenden Formlingslage 4a, von denen die erste Fördereinrichtung 7 zwischen dem Umladeplatz 6 und dem Be- und Entladeplatz 5 wirksam ist und die zweite Fördereinrichtung 8 zwischen dem Be- und Entladeplatz 5 und einem zugehörigen Fach 9 im Trocknergestell 3 wirksam ist, wobei mehrere übereinander angeordnete Fächer 9 im Trockengestell 3 vorgesehen sind, in denen sich die Formlingslage 4a jeweils in einer Deponierstellung befindet.

Ein Be- und Entladevorgang wird weiter unten noch beschrieben.

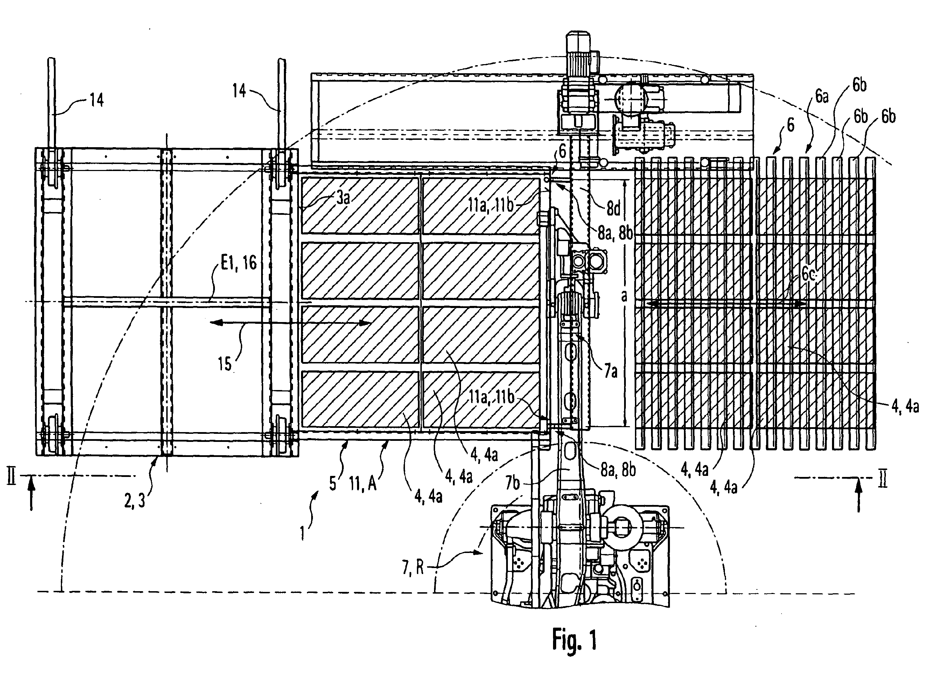

Weitere wesentliche Teile der Be- und Entladestation 1 sind flache, z.B. platten-, gitter- oder schalenförmige Formlingsträger 11, die für eine Vollbeladung des Trocknergestells 3 in der Anzahl der übereinander und gegebenenfalls auch nebeneinander angeordneten Fächer 9 vorhanden sind, und die während des Beladens oder Entladens durch eine lösbare Verbindungsvorrichtung 12 mit wenigstens einem Schub- und Zugelement 8a der zweiten Fördereinrichtung 8 verbunden und somit vorübergehend Teil der zweiten Fördereinrichtung 8 sind. Nach dem Beladen, also wenn die Formlingsträger 11 mit den darauf befindlichen Formlingslagen 4a sich in den Fächern 9 befinden, sind die Formlingsträger 11 im vom Schub- und Zugelement 8a gelösten Zustand Teile des Trocknergestells 3, mit dem sie auch in einen nicht dargestellten Trockner förderbar sind, z.B. mit Rädern 13 auf Schienen 14 verfahrbar sind, die sich horizontal und z.B. quer zur Be- und Entladebewegungsrichtung, siehe Doppelpfeil 15, erstrecken. Beim vorliegenden Ausführungsbeispiel befinden sich der Parkplatz 2 für das zu beladende oder entladene Trocknergestell 3, der Be- und Entladeplatz 5 und der Umladeplatz 6 - in der Draufsicht gemäß Fig. 1 gesehen - auf einer Geraden, die sich längs der Be- und Entladebewegungsrichtung 15 erstreckt und durch eine Mittellinie 16 verdeutlicht ist. Diese Mittellinie 16 verdeutlicht auch die Längsrichtung der Be- und Entladestation 1.

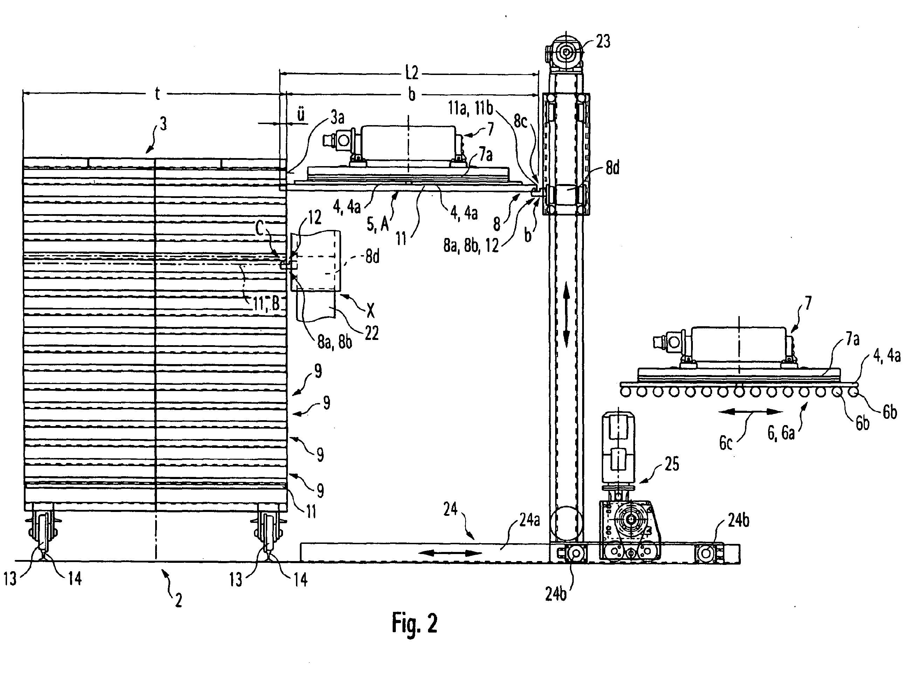

Der Umladeplatz 6 kann durch das Ende einer Förderbahn 6a gebildet sein, die sich zum Beispiel in der Längsrichtung der Mittellinie 16 erstreckt und nebeneinander angeordnete Förderrollen 6b aufweisen kann, auf denen die Formlinge 4 als Formlingslage 4a für einen Beladevorgang zuführbar oder für einen Entladevorgang abführbar sind. Die Förderrichtung bzw. ein zugehöriger Antrieb der Förderbahn 6a ist entsprechend änderbar, siehe Doppelpfeil 6c. Wie Fig. 2 deutlich zeigt befindet sich die Förderbahn 6a bzw. der Umladeplatz 6 in einer Höhe, die höher ist als das bzw. die untersten Fächer 9 des Trocknergestells 3.

Die erste Fördereinrichtung 7 weist einen Umladeträger 7a auf, der beim vorliegenden Ausführungsbeispiel dazu eingerichtet ist, die Formlingslage 4a aufzunehmen und zu fördern, und er kann z.B. durch eine Greifervorrichtung mit einem oder mehreren Greifern, z.B. Sauggreifern, gebildet sein.

Ein wesentliches Merkmal des Umladeträgers 7a ist, dass er sich wenigstens am Umladeplatz 6 und am Be- und Entladeplatz 5 oder auf seinem gesamten Förderweg auch in den unterschiedlichen Höhenlagen in einer im wesentlichen horizontalen Lage befindet. Beim vorliegenden Ausführungsbeispiel ist der Umladeträger 7a im freien Endbereich eines Schwenkarms 7b gelagert, der in seinem Basisbereich an einem Roboteroberteil 7c bewegbar gelagert ist, das um eine vertikale Schwenkachse 7d horizontal schwenkbar auf einem stationären Roboterunterteil 7e gelagert und durch einen Antrieb 7f in wahlweise veränderlichen Schwenkbewegungslängen schwenkbar ist. Der Schwenkarm 7b erstreckt sich quer zur vertikalen Schwenkachse 7d des Unterteils 7e, z.B. im wesentlichen horizontal, wobei er durch eine Gelenkanordnung 7g des Roboteroberteils 7c auf und ab mit wahlweise einstellbaren Schwenkbewegungslängen und somit in unterschiedliche Höhenlagen schwenkbar ist. Beim Ausführungsbeispiel ist die Gelenkanordnung 7g durch ein Gelenkviereck 17 mit einem ersten sich aufrecht erstreckenden Lenkerarm 17a konstanter Länge ist, und einem, z.B. inneren, aufrechten zweiten Lenkerarm 17b, der durch einen Antrieb 7h in wahlweisen Längen gezielt längenveränderlich ist. Die beiden unteren und oberen äußeren und inneren Gelenke 17c, 17d, 17e 17f des Gelenkvierecks 17 bilden eine positionsveränderliche Gelenkanordnung 7g, die eine wahlweise und gezielte aufwärts und abwärts gerichtete Schwenkbarkeit des Schwenkarms 7b ermöglicht.

Um beim Fördern des Umladeträgers 7a durch Schwenken um die vertikale Schwenkachse 7d wenigstens auf dem Umladeplatz 6 und dem Be- und Entladeplatz 5, eine parallele Ausrichtung des Umladeträgers 7a bezüglich einer die Längsachse 16 enthaltenden vertikalen Längsebene E1 zu gewährleisten, ist der Umladeträger 7a um eine zweite vertikale Schwenkachse 7i schwenkbar gelagert und durch einen Antrieb 7j um einen wahlweisen Schwenkwinkel gezielt schwenkbar, so dass der Umladeträger 7a während seiner Förderung wenigstens an den Plätzen 5, 6 oder kontinuierlich in eine mit der vertikalen Mittelebene E1 übereinstimmende oder dazu parallel angeordnete Schwenkstellung schwenkbar ist.

Um bei einem auch vertikal schwenkbaren Schwenkarm 7b wenigstens an den Plätzen 5, 6 oder auch kontinuierlich während der Förderbewegung die vorbeschriebene horizontale Anordnung des Umladeträgers 7a zu gewährleisten, ist das die vertikale Schwenkachse 7i aufweisende Schwenkgelenk 7j an einem vorzugsweise endseitigen Armlängsabschnitt 7k angeordnet, der durch ein Gelenk 71 mit einer sich horizontal und quer zum Schwenkarm 7b erstreckenden Gelenkachse 7m mit dem übrigen Längsabschnitt des Roboterarms 7b verbunden ist und somit um die Schwenkachse 7m durch einen Antrieb 7n um die Schwenkachse 7m in die jeweilige Horizontalstellung schwenkbar ist. Der Antrieb 7n kann eine Hebelanordnung mit einem sich etwa in der Längsrichtung des Roboterarms 7b erstreckenden und durch einen geregelten Antrieb längs bewegbaren Lenkerhebel 7o aufweisen, der am Armlängsabschnitt 7k schwenkbar angreift.

Der soweit beschriebene und in seiner Gesamtheit mit R bezeichnete Roboter ist vorzugsweise auf einer der beiden sich parallel zur vertikalen Längsebene E1 ersteckenden Seiten des Be- und Entladeplatzes 5 angeordnet und zwar vorzugsweise bezüglich den Plätzen 5, 6 etwa mittig. Hierdurch ergeben sich für den Umladeträger 7a bzw. die Formlingslage 4a and den Plätzen 5, 6 bzw. in ihren horizontalen Schwenkendstellungen in der vertikalen Längsmittelebene E1 unter Berücksichtigung der jeweiligen Höhenlage nur verhältnismäßig geringe Unterschiede der jeweils vorhandenen horizontal oder schräg gerichteten Längen L1 des Schwenkarmes 7b, was sich durch ein geregeltes Kippen des Gelenkvierecks 17 erreichen lassen.

Die erste Fördereinrichtung 7 bzw. der Roboter R weist somit einen den Umladeträger 7a tragenden Schwenkarm 7b auf, der eine Schwenkbarkeit des Umladeträgers 7a um vier Schwenkachsen gewährleistet, nämlich die vertikale Schwenkachse 7d, die sich jeweils ergebende horizontale Schwenkachse der Gelenkanordnung 7g, die zweite vertikale Schwenkachse 7i und die horizontale Schwenkachse 7m.

Die zweite Fördereinrichtung 8 weist ein etwa in der vertikalen Längsebene E1 angeordnetes (nichts dargestellt) oder zwei in einer vertikalen Querebene und in einem horizontalen Querabstand a auf beiden Seiten von der vertikalen Längsmittelebene E1 angeordnete Schub- und Zugelemente 8a auf, die in jede Höhenlage der Fächer 9 höhenverstellbar sind. In der jeweiligen Höhenlage ist das bzw. sind die Schub- und Zugelemente 8a jeweils zwischen einer ersten Hubstellung b (Fig. 1), die sich im dem Parkplatz 2 abgewandten Endbereich des Be- und Entladeplatzes 5 befindet, und einer zweiten Hubstellung c wahlweise hin und her bewegbar, die sich im Übergangsbereich zwischen den Parkplatz 2 und dem Be- und Entladeplatz 5 befindet. Hierdurch sind die Schub- und Zugelemente 8a in jeder Höhenlage der Fächer 9 geeignet, den zugehörigen Formlingsträger 11 zwischen seiner Be- und Entladestellung A und seiner im Fach befindlichen Deponierstellung B horizontal zu bewegen. Die zwischen den Formlingsträgern 11 und dem wenigstens einen Schub- und Zugelementen 8a wirksame lösbare Verbindungsvorrichtung 12 wird durch zwei Verbindungsvorrichtungsteile gebildet, nämlich dass wenigstens eine der zweiten Fördereinrichtung 8 zugehörige Schub- und Zugelement 8a sowie jeweils wenigstens ein dem Schub- und Zugelement 8a horizontal gegenüber liegend am zugewandten Ende des jeweiligen Formlingsträgers 11 angeordneten Verbindungsvorrichtungsteils 11a.

Im Rahmen der Erfindung kann an den Formlingsträgern 11 somit ein etwa mittiges oder zwei im horizontalen Abstand a voneinander angeordnete Verbindungsvorrichtungsteile 11a vorgesehen sein, die beim Ausführungsbeispiel mit dem bzw. den zugehörigen Schub- und Zugelementen 8a in der horizontalen Längsrichtung formschlüssig zusammen wirken und die Verbindungsvorrichtung 12 bilden.

Beim vorliegenden Ausführungsbeispiel ist die Verbindungsvorrichtung 12 durch eine Verhakungsvorrichtung gebildet mit einem Verbindungshaken 8b an dem einen Verbindungsteil, der ein dazu passendes Verhakungsteil am anderen Verbindungsteil über- oder untergreift und hintergreift. Das Verhakungsteil am Formlingsträger 11 ist vorzugsweise durch einen sich vertikal, insbesondere nach unten, erstreckenden Steg 11b gebildet, der vom zugehörigen Formlingsträger 11 abgebogen oder abgewinkelt ist, insbesondere nach unten, und zu einer beträchtlichen Stabilisierung des Formlingsträgers 11 beiträgt. Der zugehörige Verbindungshaken 8b ist zum Beispiel durch einen von der zweiten Fördereinrichtung 8 horizontal in Richtung auf den Be- und Entladeplatz 5 abstehenden Stift oder hochkant angeordneten Steg gebildet, in dem bei einem Übergriff unterseitig (nicht dargestellt) oder bei einem Untergriff gemäß Fig. 2 oberseitig eine Verbindungsausnehmung 8c angeordnet ist, in die in der Verbindungsstellung der Verbindungssteg 11b einfasst, wodurch der Formschluss in horizontaler Richtung gewährleistet ist. Diese mechanische Verbindung lässt sich in einfacher Weise dadurch schließen, dass der Verbindungshaken 8b beim Ausführungsbeispiel unter den Verbindungssteg 11b bewegt und so angehoben wird, dass letzterer in die Verbindungsausnehmung 8c eintaucht. Zum Lösen der Verbindung braucht der Verbindungshaken 8b lediglich abgesenkt zu werden, so dass der Verbindungssteg 11b aus den formschlüssigen Wirkbereich der Verbindungsausnehmung 8c gelangt.

Im Rahmen der Erfindung ist eine erfindungsgemäße Verbindungsvorrichtung 12 auch dann vorteilhaft wirksam, wenn der Verbindungshaken das zugehörige Gegenverbindungsvorrichtungsteil nicht untergreift sondern übergreift und dabei eine um 180° verdrehte Ausgestaltungsform aufweist, wobei die Verbindungsausnehmung unterseitig am Verbindungshaken vorhanden ist.

Wenn gemäß Fig. 1 zwei ein horizontalen Querabstand voneinander aufweisende Schub- und Zugelemente 8a und zwei im passenden Querabstand a voneinander angeordnete und zum Beispiel durch einen sich quer durchgehend erstreckenden Verbindungssteg 11b gebildete Verbindungsvorrichtungsteile 11a vorgesehen sind, erhält der jeweils verbundene Formlingsträger 11 durch die beiden Verbindungsvorrichtungen 12 Stabilität gegen ein seitliches Schwenken. Dabei lässt die bzw. lassen die hakenförmigen Verbindungsvorrichtungen 12 eine quer gerichtete relative Verschiebung zwischen den Verbindungsvorrichtungsteilen zu, sodass es in der jeweils vorhandenen Längsführung 9a in den Fächern 9 zu keinen seitlichen Zwängungen kommt.

Die Längsführung 9a kann jeweils durch einen, z.B. vom Trocknergestell seitlich nach innen abstehenden, Tragsteg 9b gebildet sein, auf denen die Formlingsträger 11 mit seitlich nach außen abstehenden Tragstegen 11 c aufliegt, wobei die von den Tragstegen 11c nach unten ragenden Seitenwände 11d der Formlingsträger 11 im Sinne eines Schiebers mit zugehörigem Bewegungsspiel zwischen den einander seitlich gegenüberliegenden Tragstege 9b längs geführt sind. Folglich bilden auf beiden Seiten des zugehörigen Faches 9 die Tragstege 9b und 11c sowie die Seitenwände 11d die Längsführung 9a.

Die Formlingsträger 11 können nicht nur an ihren Längsrändern sondern auch an ihren Querrändern sich quer erstreckende Seitenwände 11d aufweisen, wobei jeweils eine Bodenwand 11e für die Formlinge 4 bzw. Formlingslage 4a mit den oberen Rändern der Seitenwände 11d oder mit deren unteren Rändern verbunden ist. Im ersteren Falle weisen die Formlingsträger jeweils die Form einer flachen Kappe auf. Im zweiten Fall weisen sie die Form einer flachen Schale auf, wobei sich die Bodenwand 11e jeweils im wesentlichen horizontal erstreckt. Der Abstand a zwischen den Schub- und Zugelementen 8a ist kleiner als die sich quer erstreckende Breite des längs gerichteten Seitenwände 11d oder des Fromlingsträgers. Hierdurch stehen die Endbereiche der sich quer erstreckenden Seitenwände 11d als Verbindungsstege 11b für den vorbeschriebenden formschlüssigen Eingriff zur Verfügung.

Die Länge L2 der Formlingsträger 11 entspricht im Wesentlichen der Tiefe t der Fächer 9 im Trocknergestell 3, so dass das bzw. die Verbindungsvorrichtungsteile 11a sich im Bereich oder direkt an der Be- und Entladeseite 3a des Trocknergestells 3 befindet bzw. befinden. Die insbesondere flach ausgebildeten Formlingsträger 11 bilden somit vorzugsweise eine Schublade für das zugehörige Fach 9. Der Abstand b der Schub- und Zugelemente 8a in deren Ausgangsstellung b von der Be- und Entladeseite 3a ist kleiner als die Länge L2 der Formlingsträger 11. Deshalb überlappen diese ihre Auflage im Trocknerwagen 3 um das Überlappungsmaß ü, wodurch der Formlingsträger 11 an diesem Ende abgestützt ist.

Das wenigstens eine Schub- und Zugelement 8a ist beim vorliegenden Ausführungsbeispiel an einem sich horizontal erstreckenden und wahlweise in die Höhenlagen der Fächer 9 bewegbaren Querarm 8d gehalten, der vertikal verstellbar in einer Vertikalführung 21 einer aufrechten Führungssäule 22 gelagert und durch einen Vertikalantrieb 23 in die Höhenlage eines jeweils gewünschten Faches 9 bewegbar ist. Die Führungssäule 22 ist neben dem Be- und Entladeplatz 5 gelagert, vorzugsweise an einer von den beiden sich parallel zur vertikalen Längsmittelachse E1 erstreckenden Seiten des Be- und Entladeplatzes 5, vorzugsweise auf der dem Roboter R gegenüberliegenden Seite, wie es Fig. 1 zeigt. Außerdem ist die Führungssäule 22 parallel zur vertikalen Mittelebene E1 in einer Längsführung 24 durch ein Längsantrieb 25 hin und her verschiebbar und zwar so weit, dass das oder die Schub- und Zugelemente 8a zwischen den Hubendstellungen b, c hin und her verschiebbar sind. Die Längsführung 24 kann z.B. durch eine oder zwei quer voneinander beabstandete Führungsschienen 24a gebildet sein, an denen die Führungssäule 22 mittels daran abrollbaren Führungsrädern 24b verfahrbar ist. Diese können z.B. an einer sich längs erstreckenden Führungsbasis 26 gelagert sein, von der sich die Führungssäule 22 nach oben erstreckt, insbesondere von deren dem Parkplatz 2 zugewandten Endbereich der Führungsbasis 26. Der Längsantrieb 25 kann z.B. auf der Führungsbasis 26 angeordnet sein.

Die Längsführung 24 bzw. die sie bildenden Führungsschienen 24a können auf dem vorhandenen Boden befestigt sein.

Nachfolgend wird ein Beladungs- und Entladungsvorgang beispielsweise beschrieben.

Die Formlinge 4 werden auf der Förderbahn 6a zum Umladeplatz 6 transportiert, wo sie zum Stillstand kommen. Mit dem Umladeträger 7a der ersten Fördereinrichtung 7 bzw. des Roboters R werden die am Umladeplatz 6 befindlichen Formlinge als Formlingslage 4a ergriffen und am Be- und Entladeplatz 5 auf einem dort bereitstehenden Formlingsträger 11 abgesetzt, der mit der zweiten Fördereinrichtung 8 vorher aus dem jeweils zugehörigen Fach 9 auf den Be- und Entladeplatz 5 herausgezogen worden ist. In dieser Position wird der Formlingsträger 11 an seinem dem Trocknergestell 3 abgewandten Ende durch das bzw. die Schub- und Zugelemente 8a getragen und an seinem dem Trocknergestell 3 zugewandtem Ende in vorbeschriebener Weise an diesem getragen (siehe ü). Durch ein Bewegen des Querarms 8d mit den Schub- und Zugelementen 8a in die Hubendstellung c wird der beladene Formlingsträger 11 in seine Deponierstellung B im zugehörigen Fach 9 geschoben. Wenn eine gewünschte Anzahl, insbesondere alle Fächer 9, in vorbeschriebener Weise beladen sind, wird der Querarm 8d längs in eine Bereitschaftsstellung bewegt, in der die Schub- und Zugelemente 8a sich außerhalb des Trocknergestells 3 befinden, z.B. in der Hubendstellung b, sodass das Trocknergestell 3 weggefördert werden kann.

Zum Entladen werden die Formlingsträger 11 eines auf dem Parkplatz 2 bewegten Trocknergestells 3 mittels den Schub- und Zugelementen 8a soweit heraus gezogen, dass sie sich auf dem Be- und Endladeplatz 5 befinden, in dessen Bereich der jeweilige Formlingsträger 11 an seinen Längsenden durch die Schub- und Zugelemente 8a und das Trocknergestell 3 brückenförmig getragen ist. Mit Hilfe des Umladeträgers 7a der ersten Fördereinrichtung 7 bzw. des Roboters R lässt sich die jeweils auf dem Formlingsträger 11 befindliche Formlingslage 4a ergreifen und auf dem Umladeplatz 6 absetzen, von wo aus die Abförderung auf der Förderbahn 6a erfolgen kann.

Das Schließen der Verbindungsvorrichtung 12 zwischen dem jeweiligen Formlingsträger 11 und der zweiten Fördereinrichtung 8 erfolgt bei Ausnutzung der vertikalen Bewegbarkeit des der zweiten Fördereinrichtung 8 zugehörigen Verbindungsvorrichtungsteils 8a dadurch, dass letzteres zunächst horizontal - je nach Ausbildung der Verhakungsvorrichtung - unter bzw. über dem dem Formlingsträger 11 zugehörigen Verbindungsvorrichtungsteil 11 a bewegt wird und dann durch Absenken (nicht dargestellt) oder Anheben (dargestellt) in die Verhakungsposition bewegt wird. Bei der vorliegenden Ausgestaltung kann sowohl der Verbindungssteg 11b als auch die Verbindungsausnehmung 8c die Funktion eines Verbindungshakens erfüllen.

Je nach Höhenanordnung der Förderbahn 6a kann der Umladeträger 7a der ersten Fördereinrichtung 7 die Formlinge 4 je nach Höhenlage der Fächer 9 zur zugehörigen Höhenstellung des Be- und Entladeplatzes 5 auf oder ab bewegen.

Im Rahmen der Erfindung kann die vorbeschriebene Station 1 wahlweise auch nur zum Beladen oder nur zum Entladen vorgesehen sein und benutzt werden.

## Patentansprüche

1. Be- und Entladestation (1) mit
- einem Trocknergestell (3), das eine Mehrzahl übereinander angeordnete und zu einer Be- und Entladeseite (3a) des Trocknergestells (3) hin offene Fächer (9) zur Deponierung von Formlingen (4) auf Formlingsträgern (11) aufweist,
- einem an der Be- und Entladeseite (3a) des Trocknergestells (3) angeordneten Be- und Entladeplatz (5),
- und einer Fördereinrichtung (8) zum Fördern der Formlinge zwischen dem Be- und Entladeplatz (5) und den Fächern (9),
**dadurch gekennzeichnet,**
**dass** den Fächern (9) jeweils ein einziger Formlingsträger (11) zugeordnet ist, der zwischen einer im Fach (9) befindlichen Deponierstellung (B) und einer auf dem Be- und Entladeplatz (5) befindlichen Be- und Entladestellung (A) verschiebbar gelagert ist,
**dass** die Fördereinrichtung (8) wenigstens ein Schub- und Zugelement (8a) aufweist, dass durch einen Horizontalantrieb (25) zwischen einer ersten Stellung (b) im dem Trocknergestell (3) abgewandten Endbereich des Be- und Entladeplatzes (5) und einer zweiten Stellung (c) im dem Trocknergestell (3) zugewandten Endbereich des Be- und Entladeplatzes (5) verschiebbar ist und jeweils durch eine lösbare Verbindungsvorrichtung (12) mit dem dem Trocknergestell (3) abgewandten Endbereich der Formlingsträger (11) verbindbar ist.

2. Trocknergestell (3) für eine Be- und Entladestation (1), mit
- mehreren übereinander angeordneten und zu einer Be- und Entladeseite (3a) des Trocknergestells (3) hin offenen Fächern (9) zur Deponierung von Formlingen (4) auf Formlingsträgern (11),
**dadurch gekennzeichnet,**
**dass** den Fächern (9) jeweils ein einziger Formlingsträger (11) zugeordnet ist, der aus einer im Fach (9) befindlichen Deponierstellung (B) ausschiebbar und wieder einschiebbar ist und im Bereich seines Ausschubendes ein Verbindungsvorrichtungsteil (11a) aufweist, das Teil einer Verbindungsvorrichtung (12) mit wenigstens einem Schub- und Zugelement (8a) einer Fördereinrichtung (8) ist zum Ein- und Ausschieben des Formlingsträgers (11) in und aus dem zugehörigen Fach (9).

3. Be- und Entladestation nach Anspruch 1 oder Trocknergestell nach Anspruch 2,
**dadurch gekennzeichnet,**
**dass** das Verbindungsvorrichtungsteil (11a) Teil einer Verhakungsvorrichtung ist.

4. Be- und Entladestation oder Trocknergestell nach einem der vorherigen Ansprüche,
**dadurch gekennzeichnet,**
**dass** das Verbindungsvorrichtungsteil (11a) durch einen sich längs der Be- und Entladeseite (3a) erstreckenden, insbesondere hochkant angeordneten, Verbindungssteg (11b) gebildet ist, der durch ein Übergreifen und Absenken oder durch ein Untergreifen und Anheben des Schub- und Zugelements (8b) mit einer an einem der Verbindungsvorrichtungsteile ausgebildeten Verbindungsausnehmung (8c) in Eingriff bringbar ist.

5. Be- und Entladestation nach einem der vorherigen Ansprüche,
**dadurch gekennzeichnet,**
**dass** zwei ein horizontalen Querabstand (a) voneinander aufweisende, Verbindungsvorrichtungen (12) vorgesehen sind.

6. Be- und Entladestation oder Trockengestell nach einem der vorherigen Ansprüche,
**dadurch gekennzeichnet,**
**dass** die Formlingsträger (11) jeweils eine Schublade des Fachs (9) bilden.

7. Be- und Entladevorrichtung oder Trocknergestell nach einem der vorherigen Ansprüche,
**dadurch gekennzeichnet,**
**dass** die Formlingsträger (11) in ihrer herausgezogenen Be- und Entladestellung (A) in ihrem dem Trocknergestell (3) abgewandten Endbereich jeweils durch das Schub- und Zugelement (8a) getragen sind.

8. Be- und Entladestation nach einem der vorherigen Ansprüche,
**dadurch gekennzeichnet,**
**dass** die Fornlingsträger (11) in ihrer herausgezogenen Be- und Entladestellung (A) in ihren dem Trocknergestell (3) zugewandten Endbereichen vom Trocknergestell (3) getragen sind, vorzugsweise in das zugehörige Fach (9) hinein ragen.

9. Be- und Entladestation nach einem der vorherigen Ansprüche,
**dadurch gekennzeichnet,**
**dass** das oder die Schub- und Zugelemente (8a) an einem sich horizontal und quer zur Ein- und Ausschubrichtung (15) erstreckenden Tragarm (8d) angeordnet sind, der an seinem einen Ende an einer Führungssäule (22) vertikal verschiebbar gelagert ist, die neben einer der beiden sich parallel zur Be- und Entladebewegungsrichtung (15) erstreckenden Seiten des Be- und Entladeplatzes (5) angeordnet und durch einen Antrieb (25) parallel zur Be- und Entladebewegungsrichtung (15) hin und her verschiebbar gelagert ist.

10. Be- und Entladestation nach einem der vorherigen Ansprüche,
**dadurch gekennzeichnet,**
**dass** ihr ein Umladeplatz (6) und eine weitere Fördereinrichtung (7) zugeordnet ist, die einen Umladeträger (7a) zum Umladen der Formlinge (4) zwischen dem Be- und Entladeplatz (5) und dem Umladeplatz (6) aufweist.

11. Be- und Entladestation nach Anspruch 10,
**dadurch gekennzeichnet,**
**dass** das Trocknergestell (3) der Be- und Entladeplatz (5) und der Umladeplatz (6) in einer sich längs der Be- und Entladebewegungsrichtung (15) erstreckenden Reihe angeordnet sind.

12. Be- und Entladestation nach Anspruch 10 oder 11,
**dadurch gekennzeichnet,**
**dass** die weitere Fördereinrichtung (7) durch einen Roboter (R) mit einem quer zu einer vertikalen Schwenkachse (7d) abstehenden und um diese schwenkbar gelagerten Schwenkarm (7b) mit einem an seinem freien Endbereich angeordneten Umladeträger (7a) für die Formlinge (4) gebildet ist, der durch den Schwenkarm (7b) um eine vertikale Drehachse (7i) drehbar, um eine horizontale Querachse (7m) schwenkbar, und durch eine Gelenkanordnung (7g) auf und ab bewegbar ist.

## Claims

1. Loading and unloading station (1) with:
- a drying frame (3), which provides a plurality of open compartments (9) arranged one above the other and open towards a loading and unloading side (3a) of the drying frame (3) for the storage of blanks (4) on blank carriers (11),
- a loading and unloading space (5) arranged at the loading and unloading side (3a) of the drying frame (3),
- and a conveyor device (8) for the transportation of the blanks between the loading and unloading space (5) and the compartments (9),
**characterised in that**,
in each case, a single blank carrier (11), which is mounted in a displaceable manner between a storage position (B) disposed in a compartment (9) and a loading and unloading position (A) disposed on the loading and unloading space (5), is allocated to the compartments (9),
that the conveyor device (8) provides at least one push and pull element (8a), which is displaceable by a horizontal drive (25) between a first position (b) in the end region of the loading and unloading space (5) facing away from the drying frame (3) and a second position (c) in the end region of the loading and unloading space (5) facing towards the drying frame (3),
and can be connected in each case by a detachable connection device (12) to the end region of the blank carrier (11) facing away from the drying frame (3).

2. A drying frame (3) for a loading and unloading station (1), with:
several compartments (9) disposed one above the other and open towards a loading and unloading side (3a) of the drying frame (3) for the storage of blanks (4) on blank carriers (11),
**characterised in that**,
in each case, a single blank carrier (11) is allocated to the compartments (9), which can be pushed out from a storage position (B) arranged in the compartment (9) and in again and provides a connection-device part (11a) in the region of its pushing end, which is part of a connection device (12) with at least one push and pull element (8a) of a conveying device (8) for pushing and pulling the blank carrier (11) respectively in and out of the associated compartment (9).

3. The loading and unloading station according to claim 1 or the drying frame according to claim 2,
**characterised in that**
the connection-device part (11a) is part of a hooking device.

4. The loading and unloading station or drying frame according to any one of the preceding claims,
**characterised in that**
the connection-device part (11a) is formed by a connection web (11b) extending along the loading and unloading side (3a), especially arranged upright, which can be brought into engagement with a connection recess (8c) formed on one of the connection-device parts by an engaging over and lowering or by an engaging under and raising of the push and pull element (8b).

5. Loading and unloading station according to any one of the preceding claims,
**characterised in that**
two connection devices (12) disposed at a horizontal, transverse distance (a) from one another are provided.

6. The loading and unloading station or drying frame according to any one of the preceding claims,
**characterised in that**
the blank carriers (11) each form a drawer of the compartment (9).

7. The loading and unloading device or drying frame according to any one of the preceding claims,
**characterised in that**
the blank carriers (11) are carried in their loading and unloading position (A) at their end region facing away from the drying frame (3) respectively by the push and pull element (8a).

8. The loading and unloading station according to any one of the preceding claims,
**characterised in that**
the blank carriers (11) are carried in their withdrawn loading and unloading position (A) at their end regions facing towards the drying frame (3) by the drying frame (3), preferably project into the associated compartment (9).

9. The loading and unloading station according to any one of the preceding claims,
**characterised in that**
the push and pull element or elements (8a) are arranged on a carrier arm (8d) extending horizontally and transversely to the pushing and pulling direction (15), which is mounted in a vertically displaceable manner at its one end on a guide column (22), which is arranged adjacent to one of the two sides of the loading and unloading space (5) extending parallel to the direction (15) of the loading and unloading movement and mounted in a manner reciprocally displaceable by a drive (25) parallel to the direction (15) of the loading and unloading movement.

10. The loading and unloading station according to any one of the preceding claims,
**characterised in that**
a transfer space (6) and a further conveying device (7) is allocated to it, which provides a transfer carrier (7a) for transferring the blanks (4) between the loading and unloading space (5) and the transfer space (6).

11. The loading and unloading station according to claim 10,
**characterised in that**
the drying frame (3), the loading and unloading space (5) and the transfer space (6) are arranged in a row extending along the direction (15) of the loading and unloading movement.

12. The loading and unloading station according to claim 10 or 11,
**characterised in that**
the further conveying device (7) is formed by a robot (R) with a pivoting arm (7b) projecting transversely to a vertical pivoting axis (7d) and mounted in a manner pivoting about the latter with a transfer carrier (7a) arranged at its free end region for the blanks (4), which is rotatable by the pivoting arm (7b) about a vertical rotational axis (7i), pivoting about a horizontal transverse axis (7m), and displaceable up-and-down by an articulated-joint arrangement (7g).

## Revendications

1. Station de chargement et de déchargement (1) avec
- une structure de séchoir (3) qui présente une pluralité de cases (9) disposées les unes au-dessus des autres et ouvertes vers un côté de chargement et de déchargement (3a) de la structure de séchoir (3) pour le dépôt d'ébauches (4) sur des supports d'ébauche (11),
- un emplacement de chargement et de déchargement (5) disposé au côté de chargement et de déchargement (3a) de la structure de séchoir (3),
- et une installation de convoyage (8) pour le convoyage des ébauches entre l'emplacement de chargement et de déchargement (5) et les cases (9),
**caractérisée en qu'**
il est associé aux cases (9) respectivement un seul support d'ébauche (11) qui est logé d'une manière déplaçable entre une position de dépôt (B) se trouvant dans la case (9) et une position de chargement et de déchargement (A) se trouvant sur l'emplacement de chargement et de déchargement (5),
en ce que l'installation de convoyage (8) présente au moins un élément de poussée et de traction (8a) qui est déplaçable par un entraînement horizontal (25) entre une première position (b) dans la zone d'extrémité de l'emplacement de chargement et de déchargement (5) éloignée de la structure de séchoir (3), et une deuxième position (c) dans la zone d'extrémité de l'emplacement de chargement et de déchargement (5) orientée vers la structure de séchoir (3) et peut être reliée respectivement par un dispositif de liaison amovible (12) avec la zone d'extrémité des supports d'ébauche (11) éloignée de la structure de séchoir (3).

2. Structure de séchoir (3) pour une station de chargement et de déchargement (1), avec
- plusieurs cases (9) disposées les unes au-dessus des autres et ouvertes vers un côté de chargement et de déchargement (3a) de la structure de séchoir (3) pour le dépôt d'ébauches (4) sur des supports d'ébauche (11),
**caractérisée en ce qu'**
il est associé aux cases (9) respectivement un seul support d'ébauche (11) qui peut être poussé hors d'une position de dépôt (B) se trouvant dans la case (9) et peut être à nouveau poussé dans celle-ci et présente au voisinage de son extrémité de poussée une partie de dispositif de liaison (11a) qui fait partie d'un dispositif de liaison (12) avec au moins un élément de poussée et de traction (8a) d'une installation de convoyage (8) pour introduire et sortir par poussée le support d'ébauche (11) dans et de la case associée (9).

3. Station de chargement et de déchargement selon la revendication 1 ou structure de séchoir selon la revendication 2,
**caractérisée en ce que**
la partie de dispositif de liaison (11a) fait partie d'un dispositif d'accrochage.

4. Station de chargement et de déchargement ou structure de séchoir selon l'une des revendications précédentes,
**caractérisée en ce que**
la partie de dispositif de liaison (11a) est formée par une nervure de liaison (11b) s'étendant le long du côté de chargement et de déchargement (3a), en particulier posée sur chant, qui peut être mis en prise par une prise par au-dessus et abaissement ou une prise par en dessous et relevage de l'élément de poussée et de traction (8b) avec un évidement de liaison (8c) réalisé à une des parties de dispositif de liaison.

5. Station de chargement et de déchargement selon l'une des revendications précédentes,
**caractérisée en ce que**
deux dispositifs de liaison (12) présentant un écart transversal horizontal (a) l'un de l'autre sont prévus.

6. Station de chargement et de déchargement ou structure de séchoir selon l'une des revendications précédentes,
**caractérisée en ce que**
les supports d'ébauche (11) forment respectivement un tiroir de la case (9).

7. Dispositif de chargement et de déchargement ou structure de séchoir selon l'une des revendications précédentes,
**caractérisé en ce que**
les supports d'ébauche (11), dans leur position de chargement et de déchargement sortie (A), sont supportés dans leur zone d'extrémité éloignée de la structure de séchoir (3) à chaque fois par l'élément de poussée et de traction (8a).

8. Station de chargement et de déchargement selon l'une des revendications précédentes,
**caractérisée en ce que**
les supports d'ébauche (11), dans leur position de chargement et de déchargement sortie (A), sont supportés dans leurs zones d'extrémité orientées vers la structure de séchoir (3) par la structure de séchoir (3), et font de préférence saillie dans la case associée (9).

9. Station de chargement et de déchargement selon l'une des revendications précédentes,
**caractérisée en ce que**
la ou les éléments de poussée et de traction (8a) sont disposés à un bras de support (8d) s'étendant horizontalement et transversalement à la direction d'entrée et de sortie par poussée (15), qui est logé à une extrémité à une colonne de guidage (22) d'une manière déplaçable verticalement, qui est disposée à côté d'un des deux côtés de l'emplacement de chargement et de déchargement s'étendant parallèlement à la direction de mouvement de chargement et de déchargement (15) et est logée d'une manière déplaçable alternativement par une commande (25) parallèlement à la direction de chargement et de déchargement (15).

10. Station de chargement et de déchargement selon l'une des revendications précédentes,
**caractérisée en ce qu'**
un emplacement de transbordement (6) et une autre installation de convoyage (7) sont associées à celle-ci, qui présente un support de transbordement (16a) pour le transbordement des ébauches (4) entre l'emplacement de chargement et de déchargement (5) et l'emplacement de transbordement (6).

11. Station de chargement et de déchargement selon la revendication 10,
**caractérisée en ce que**
la structure de séchoir (3) de l'emplacement de chargement et de déchargement (5) et l'emplacement de transbordement (6) sont disposés dans une rangée s'étendant le long de la direction de mouvement de chargement et de déchargement (15).

12. Station de chargement et de déchargement selon la revendication 10 ou 11,
**caractérisée en ce que**
l'autre installation de convoyage (7) est formée par un robot (R) avec un bras pivotant (7b) faisant saillie transversalement à un axe de pivotement vertical (7d) et logé d'une manière pivotante autour de celui-ci, avec un support de transbordement (7a) disposé à sa zone d'extrémité libre pour les ébauches (4), qui peut être amené à tourner par le bras de pivotement (7b) autour d'un axe de rotation vertical (7i), peut pivoter autour d'un axe transversal horizontal (7m) et est déplaçable vers le haut et vers le bas par un agencement d'articulation (7g).
